# EUROPEAN PATENT APPLICATION

(11) **EP 4 227 938 A1**
(43) Date of publication of application: **16.08.2023**
(21) Application number: 22305141.8
(22) Date of filing: 09.02.2022
(51) Int. Cl.: G10L 15/16, G10L 15/18, G06F 40/30, G06F 40/253

(54) **AUTOMATIC CANONICALIZATION IN A SEMANTIC TAGGER AND SPEECH-TO-TEXT PIPELINE**

(71) Applicant: Nuance Communications, Inc., Burlington, MA 01803 (US)
(72) Inventor: DIVAY, Olivier, 35490 Vieux-Vy sur Couesnon (FR)
(74) Representative: CMS Cameron McKenna Nabarro Olswang LLP

(57) **Abstract**

A method of correcting an automatic speech recognition (ASR) output of an ASR module, includes: providing a corrector model configured to receive the ASR output; pre-training and training the corrector model to map the ASR output to desired formatting of a natural language understanding (NLU) dataset; and fine-tuning the corrector model. The mapping of the ASR output utilizes deep neural network (DNN). Out-of-domain data simulating the ASR output is utilized as the ASR output for the pre-training of the corrector model; in-domain data is utilized for the training of the corrector model; and project-specific data is utilized for fine-tuning the corrector model. The data simulating the ASR output is generated by a simulated ASR runtime process including: feeding raw text into a tokenizer to generate spelled-out text; and feeding the spelled-out text into a formatter to generate formatted text as the data simulating the ASR output.

## Description

### BACKGROUND OF THE DISCLOSURE

### 1. FIELD OF THE INVENTION

The present disclosure relates to systems and methods for providing a virtual assistant (VA) service, and relates more particularly to automatic canonicalization in a semantic tagger and speech-to-text pipeline.

### 2. BACKGROUND OF THE INVENTION

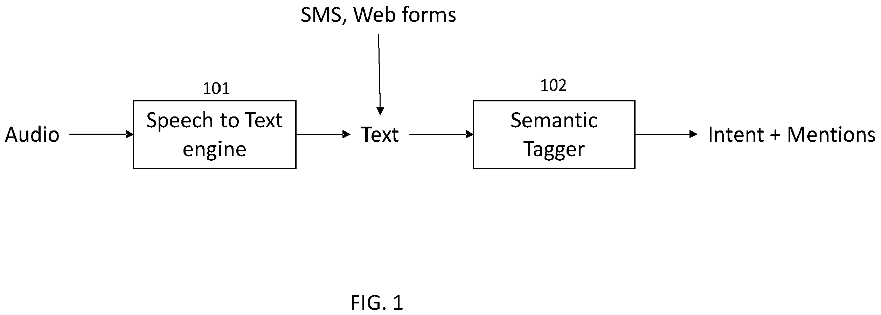

When providing a virtual assistant (VA) service, e.g., for customer service, it is desirable for the VA service to be substantially equivalent regardless of input data type (e.g., audio file or typed text of a user) across all supported channels, e.g., Web forms, Short Message Service (SMS), mobile phone audio. To achieve this, the VA system can incorporate a speech-to-text engine (e.g., an automatic speech recognition (ASR) module) which converts audio input into text, and a semantic tagger. As shown in FIG. 1, once audio input has been converted into text by the speech-to-text engine 101, all text (regardless of source, e.g., speech-to-text engine, SMS, Web forms) can be supplied to the semantic tagger 102, which determines and outputs the user's intent and associated mentions. The semantic tagger 102 enables a developer to define semantic ontology, i.e., by "intents" and "mentions". An intent can be viewed as the meaning behind what the user said. Mentions can be defined with regular expressions and word lists. For text input (e.g., SMS, Web forms), they're naturally expressed in the formatting space (e.g., " 123") as opposed to spoken/spelled out space (e.g., "one two three"). For audio input, the ASR will generate accurate spelled-out text, but inaccurate formatted text because the ASR does not know the tagger ontology, which means the developer needs to also define the ontology in the spelled out space.

Let's assume i) the speech-to-text engine 101 is an automatic speech recognition as a service (ASRaaS), e.g., in the cloud, and ii) the semantic tagger 102 is a natural language understanding as a service (NLUaaS). In the present disclosure, NLU, NLUaaS and semantic tagger will be used interchangeably. Let's also assume that enough data have been generated to properly train ASRaaS and NLUaaS, e.g., data which are in the form of a sequence of annotated sentences that the users are expected to type when using the VA, some examples of which are shown below:
I_DELIVER_ON I'd like the delivery date to be <M_DATE> December 20 </>
I_DELIVER_ON Please deliver on <M_RELDATE> Wednesday </>
I_INQUIRE When is package <M_PACK_NO> 1234 5678 </> supposed to be delivered?

The semantic tagger ontology defines multiple intents and mentions, and NLUaaS allows the VA developer to define mentions as word lists or as regular expressions. Let's assume that all the sample data include mention values that match the specified definitions (this can be automated by the NLUaaS), examples of which are shown below:
M_PACK_NO \d{4} \d{4}
M_RELDATE Monday, Tuesday, Wednesday...
M_DATE ...

Once the developer has reached the point where the NLUaaS works well on the test dataset (e.g., typed), the next step is to tie together the ASRaaS and the NLUaaS. Let's assume a typical scenario in which i) the ASRaaS has a feature that lets the developer build a language model (LM) from the project data, and ii) the developer wishes to use the NLUaaS data (without annotations) to train this LM. In this typical scenario, problems often arise. One typical problem is that text formatting isn't always accurate because the ASRaaS isn't learning the formatting from the NLUaaS data (due to the LM being trained in the spelled-out space, not the formatted space). An illustration of this typical problem is that while some numbers and dates may be interpreted correctly, because they're universal concepts, quite often the project-specific package numbers are misinterpreted, which is a problem because the semantic tagger fails to identify the associated mentions and/or the intent. Some examples of the above-described issues are shown below:
"package one two three four five six seven eight" => interpreted as "package 12345678" (not OK)
"package twelve thirty four five thousand" => interpreted as "package 1234 5000" (OK)
"package twelve three four five thousand" => interpreted as "package 12 34 5000" (not OK)

Although the ASRaaS provides means to manually tweak the formatting through option settings (e.g., influence how dates are formatted), there is no known method of automatically correcting the formatting and/or the identification of ontology-specific mentions and/or intent. The conventional approach to addressing this issue involves the following: i) ASRaaS generates spelled-out text (spoken forms are preserved); ii) apply the semantic tagger to the minimally formatted form of the text (spelled out words); and iii) the developer additionally provides regular expressions and list values in the spoken space, which is extremely cumbersome.

Therefore, short of training the ASR formatter to understand the NLU ontology, a need exists to provide a method of automatically correcting the ASR formatting.

### SUMMARY OF THE DISCLOSURE

According to an example embodiment of the present disclosure, a corrector model is provided to correct the incorrect formatting of ASRaaS to the desired formatting of the NLUaaS dataset.

According to an example embodiment of the present disclosure, a method of training a formatting corrector model is provided, which method includes providing a list of matching pairs of ASR output and the corresponding desired NLU input for the training samples, and teaching the corrector model to fix the formatting.

An example embodiment of a method according to the present disclosure includes pre-training a corrector model on out-of-domain data simulating the speech-to-text output, then fine-tuning the corrector model on project-specific data.

An example embodiment of a method according to the present disclosure includes pre-training a corrector model on out-of-domain data simulating the speech-to-text output, refining the pre-trained model using in-domain data, then fine-tuning the corrector model on project-specific data.

According to another example embodiment of the present disclosure, speech-to-text output is artificially generated without audio data by simulated ASR runtime process including: i) feeding raw text into a tokenizer to generate spelled-out text; and ii) feeding the spelled-out text into a formatter to generate formatted text.

According to another example embodiment of the present disclosure, for one of pre-training and training of a corrector model, i) raw text fed into the tokenizer in the simulated ASR runtime process is used as NLU expected input, and ii) formatted text produced by the formatter in the simulated ASR runtime process is used as ASR output.

According to an example embodiment of the present disclosure, for fine-tuning of the corrector model, i) the project sentences are fed into a simulated ASR runtime process using raw text to generate ASR output, and ii) the project sentences are used as NLU expected input.

### BRIEF DESCRIPTION OF THE FIGURES

FIG. 1 illustrates an event-driven architecture of a virtual assistant (VA) system including a speech-to-text engine and a semantic tagger.
FIG. 2 illustrates an event-driven architecture of an example embodiment of a VA system including a speech-to-text engine, a semantic tagger, and a corrector model.
FIG. 3 illustrates various phases of an example method according to the present disclosure, including pre-training, training and fine-tuning of the corrector model.
FIG. 4 illustrates a side-by-side comparison of a true ASR runtime process using audio data vs. a simulated ASR runtime process using raw text.
FIG. 5 illustrates a request-driven runtime process architecture for an example embodiment including a corrector model.
FIG. 6 illustrates a fine-tuning process architecture for an example embodiment including a corrector model.

### DETAILED DESCRIPTION

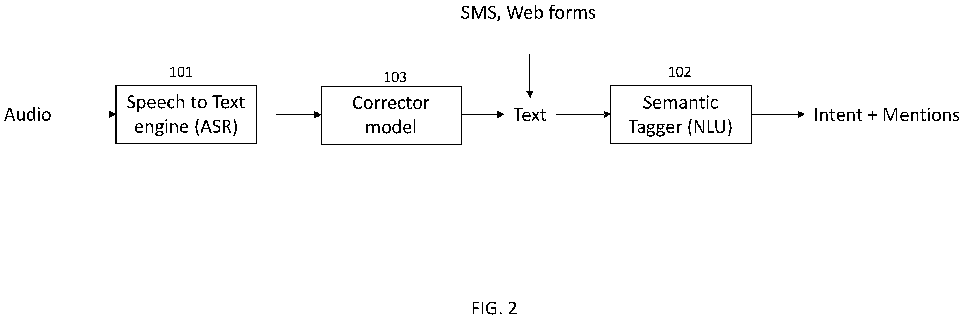

FIG. 2 illustrates an event-driven architecture of an example embodiment of a VA system including a speech-to-text engine 101 (e.g., ASRaaS), a semantic tagger 102 (e.g., NLUaaS), and a corrector model 103 positioned between the speech-to-text engine 101 and the semantic tagger 102. According to this example embodiment, the corrector model 103 is provided to correct the incorrect formatting of ASRaaS output to the desired formatting of the NLUaaS dataset, e.g., based on a list of matching pairs of ASRaaS output and the corresponding desired NLUaaS input for the training samples, and teaching the corrector model 103 to fix the formatting. An example list of matching pairs of ASRaaS output (also referred to as "ASR output") and corresponding desired NLUaaS input (also referred to as "NLU expected" input) is shown below:
(ASR output, NLU expected)
(package 12345678, package 1234 5678)
(package 1234 5000, package 1234 5000)
(package 12 34 5000, package 1234 5000)
In this example embodiment, the corrector model 103 utilizes a Deep Neural Network (DNN).

In practice, an NLUaaS project does not include a lot of manually annotated and curated samples, because this effort is time consuming and expensive. As a result, it is usually not feasible to train a large (i.e., accurate) corrector model using project data alone. One example technique for remedying this issue includes pre-training a corrector model, then fine-tuning the model. In this example, the corrector model is initially trained on gigabytes of out-of-domain data (simulating the speech-to-text output), then the corrector model is fine-tuned on project-specific data. In the case in-domain data (e.g., data from other customers in the same domain) are available, an additional step of refining the pre-trained model can be provided before fine-tuning the model.

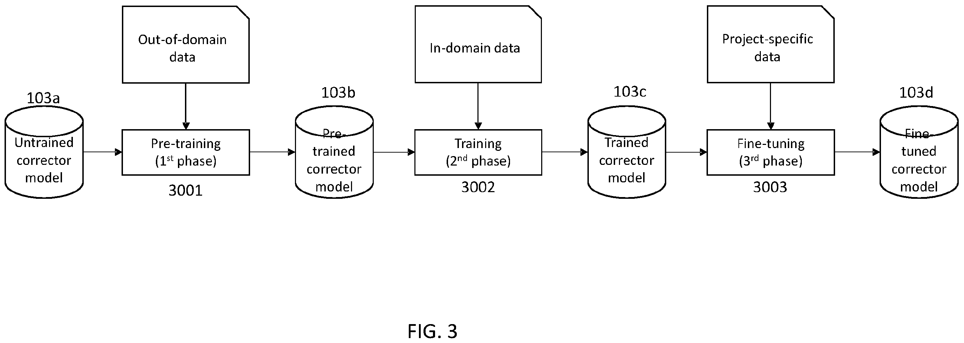

As shown in FIG. 3, untrained corrector model 103a is pre-trained with out-of-domain data in the pre-training phase 3001 (which is the 1^{st} phase) to produce the pre-trained corrector model 103b. Next, the pre-trained corrector model 103b is trained with in-domain data (availability of which is assumed in this example) in the training phase 3002 (which is the 2^{nd} phase) to produce the trained corrector model 103c. Subsequently, the trained corrector model 103c is fine-tuned with project-specific data in the fine-tuning phase 3003 (which is the 3^{rd} phase) to produce the fine-tuned corrector model 103d.

A brief explanation of project data, in-domain data, and out-of-domain data will be provided here. Project data is the semantically-annotated (i.e., intent and mention) data used by the developer for the VA project. Project data consists of a set of annotated samples (sentences) that the developer has either manually created or collected from a production system. When comparing the project data to a second set of data, it's possible to measure the distance between them by comparing their word sets and unigram frequencies. In this comparison, some data is said to be "in-domain" when the data's distance is minimal (or null) to the target project data, meaning that it's much more relevant for training a model, as opposed to "out-of-domain" when the data's distance from the target project data is non-trivial. For example, let's assume a cardiology model is sought to be built. It is preferable to train the model with cardiology data (in-domain data), rather than any other type of healthcare data (out-of-domain data), and certainly far better than newspaper articles (data which is further out-of-domain).

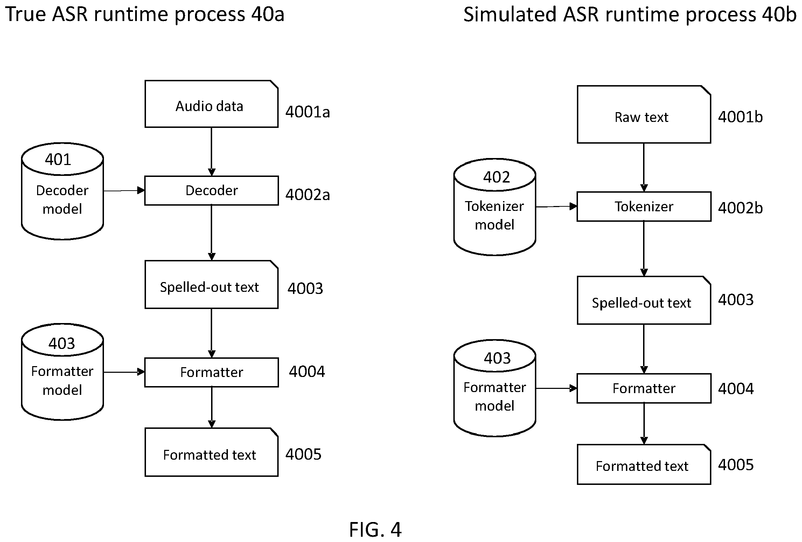

In both the pre-training phase 3001 and the training phase 3002 shown in FIG. 3, the same data preparation process can be utilized. A cost-effective method for artificially generating sufficient amount of speech-to-text output without audio data is to utilize some of the tools used for the ASR model, e.g., a tokenizer and a formatter. A tokenizer can convert, e.g., formatted numbers into spelled out words, and a formatter can do the exact opposite. FIG. 4 illustrates a side-by-side comparison of a true (using audio data) ASR runtime process (shown on the left side) vs. a simulated (using raw text) ASR runtime process (shown on the right side). The true (using audio data) ASR runtime process can include the following: i) audio data 4001a is fed into the decoder 4002a which utilizes the decoder model 401 to generate spelled-out text 4003; and ii) the spelled-out text 4003 is fed into the formatter 4004 which utilizes the formatter model 403 to generate formatted text 4005. The simulated (using raw text) ASR runtime process can include the following: i) raw text 4001b is fed into the tokenizer 4002b which utilizes the tokenizer model 402 to generate spelled-out text 4003; and ii) the spelled-out text 4003 is fed into the formatter 4004 which utilizes the formatter model 403 to generate formatted text 4005.

Example data going through the simulated (using raw text) ASR runtime process can be processed as follows:

| **Raw text** | **Spelled-out text** | **Formatted text** |
|---|---|---|
| Dec. 22, 2021 | December twenty second twenty twenty one | 12/22/21 |
| 10:55 PM | five to eleven PM | 10:55 PM |

Note how the tokenizer and formatter operation isn't idempotent. In some cases, the context can be used to break the tie, but often there are just multiple acceptable ways of writing down (i.e., format) a spoken form, such as a date. The developer's NLU mention definitions should expect this possibility, i.e., if a date is expected, then the date mention definitions must capture every possible way a date can be formatted. If the developer wished to account for the many possible spelled-out forms, the developer would have to design the NLU mention definitions to capture all spelled-out forms, which would be very cumbersome.

In the simulated (using raw text) ASR runtime process, the scenario gets more complex when the formatter and/or the tokenizer have no knowledge of the developer's NLU-specific mentions and cannot learn these mentions. For example, serial numbers have this unique characteristic that it is difficult to predict i) how the serial numbers should be spoken, and ii) how the serial numbers should be written down. Example data can end up being processed as follows:

| **Raw text** | **Spelled-out text** | **Formatted text** |
|---|---|---|
| 1234 5678 | twelve thirty four five six seven eight | 12 30 45678 |

Pre-training a corrector model with gigabytes of out-of-domain data will not help with project-specific mentions, but the pre-training will help the corrector model acquire a solid understanding of the language, nonetheless. In the example embodiment described herein, i) "Raw text" is used as "NLU expected" input, and ii) "Formatted text" is used as "ASR output" for the corrector model pre-training and training. That is, the corrector model is going to learn how to correct the formatting differences that have been introduced by the joint tokenizer/formatter operation (which tokenizer/formatter operation is a good proxy for the true (audio) ASR runtime process utilizing decoder/formatter operation).

In one example embodiment of the present disclosure, the corrector model is not trained to learn to change time and date formats, since these are most likely arbitrary in the training data, and, as previously stated, NLUaaS should be robust to all time and date formats. Thus, the corrector model is pre-trained/trained to focus on other errors the ASRaaS formatter might introduce, e.g., the corrector model can be expected to encounter a large number of serial numbers of all sorts, and learn some unique characteristics about the serial numbers and the contexts in which the serial numbers appear.

Turning to fine-tuning (3^{rd} phase, 3003 shown in FIG. 3), it should be noted that fine-tuning is different from the pre-training and training phases in that i) all annotated mentions are expected to match the ontology definitions, and ii) project-specific mentions are encountered in the fine-tuning phase. The possibility exists that the developer forgets to provide samples with mentions, in which case no training data would exist, or that the mention values don't match the ontology definitions, and these use cases can be captured at train time and the developer notified of the gap. Otherwise, the fine-tuning process is similar to the pre-training and training process: the project sentences are fed to the simulated (using raw text) ASR runtime process to generate ASR output. In this example embodiment, for the fine-tuning data, i) the ASR output is used as processed annotated sentences, and ii) NLU Expected input is used as annotated sentences. In this example embodiment, the corrector model is effectively being fine-tuned to improve the handling of project-specific formatting.

As discussed above, the ASRaaS formatting (or "ASR output") is most likely to divulge from project-specific mention definitions, particularly serial numbers. One potential technique for addressing this issue is data augmentation involving automatically producing more fine-tuning data. Since the developer's project will include i) annotated project-specific samples, and i) mention definitions, including lists and regexes (regular expressions), it's possible to use manually annotated sentences as templates, and regular expressions and lists in a generative capacity. Some examples of this data augmentation involving automatically producing more fine-tuning data are shown below:
Original: I_INQUIRE When is package <M_PACK_NO> 1234 5678 </> supposed to be delivered?
Template: I_INQUIRE When is package \d{4} \d{4} supposed to be delivered?
Generated1: I_INQUIRE When is package 0987 4325 supposed to be delivered?
Generated2: I_INQUIRE When is package 7251 0076 supposed to be delivered?
By providing this data augmentation involving automatically producing more fine-tuning data, the joint tokenizer/formatter operation stands a greater chance of producing more varied mistakes, which in turn increases the robustness of the correction model.

The above-described example embodiment provides as solution for automatically correcting the formatting and/or the identification of project-specific mentions and/or intent, which solution is more robust and less cumbersome than the currently-known approaches. Once the desired ontology (e.g., for a VA system) is properly defined, the developer merely needs to ensure that the annotated samples for the project are properly formatted. In one example embodiment, a check is automatically performed to verify that a mention formatting matches its definition in the ontology In addition, all project-specific mentions should be represented in the project data.

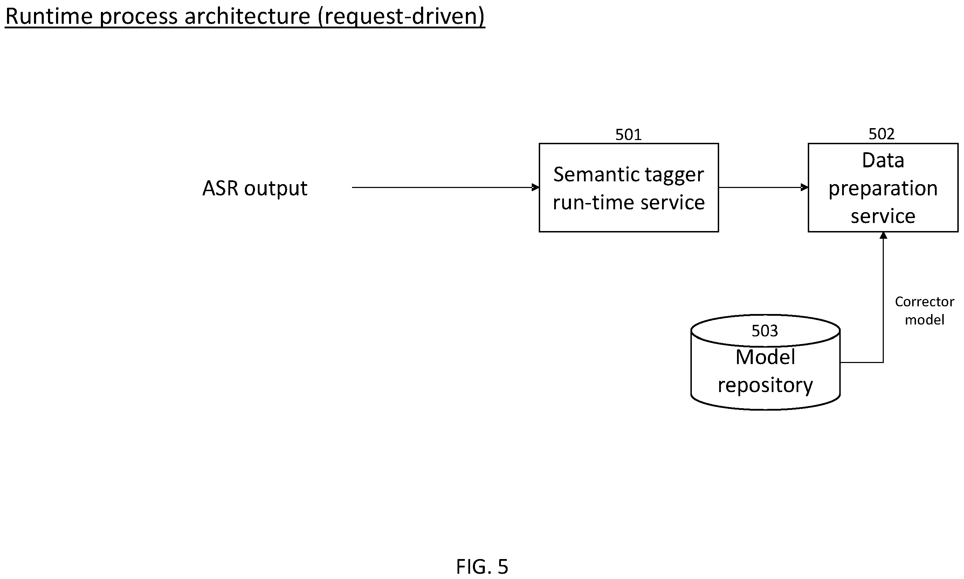

FIG. 5 illustrates a request-driven runtime process architecture for an example embodiment including a corrector model, which runtime process architecture assumes a microservice environment. In a microservice environment, the following conditions are assumed:
i) Services are containerized.
ii) Orchestration may be handled by Kubernetes. Kubernetes determines what virtual machine (VM) each new container instance should run on.
iii) The semantic tagger runtime service 501 can be decomposed into smaller services, e.g., front-end grammar portion and a back-end statistical model portion.
As shown in the example embodiment of FIG. 5, ASR output (e.g., from a speech-to-text engine) is provided to the semantic tagger runtime service 501. The semantic tagger runtime service 501 calls the data preparation service 502 to correct the ASR output into NLU expected input by utilizing the corrector model from the model repository 503. Then, the semantic tagger runtime service 501 tags intents and mentions from the NLU expected input.

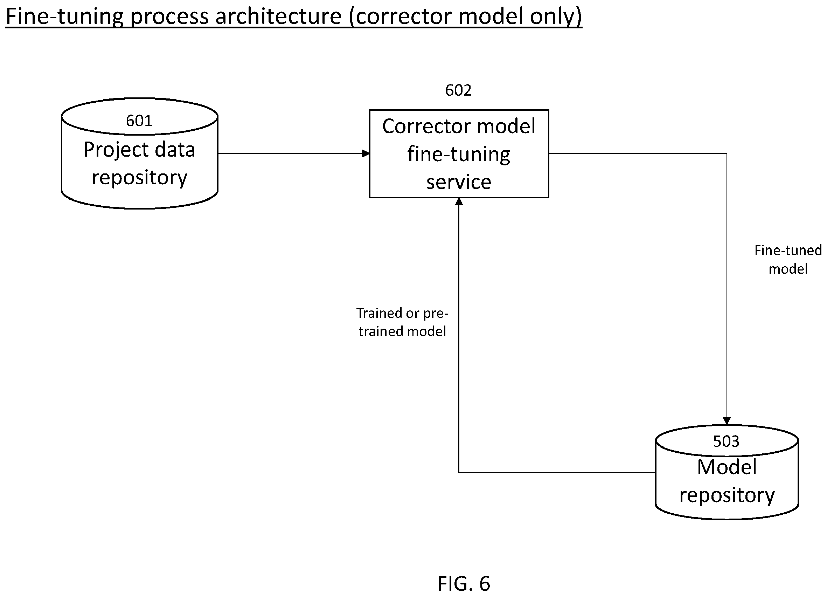

FIG. 6 illustrates a fine-tuning process architecture for an example embodiment including a corrector model, which process architecture assumes a microservice environment. In a microservice environment, the following conditions are assumed:
i) Services are containerized.
ii) Orchestration may be handled by Kubernetes. Kubernetes determines what virtual machine (VM) each new container instance should run on.
As shown in the example embodiment of FIG. 6, project data from the project data repository 601 is provided to the corrector model fine-tuning service 602. The corrector model fine-tuning service 602 utilizes the project data to fine-tune a pre-trained and/or a trained corrector model supplied from the model repository 503.

The present disclosure provides a first example method of correcting an automatic speech recognition (ASR) output of an ASR module, comprising: providing a corrector model configured to receive the ASR output; and at least one of pre-training and training the corrector model to map the ASR output to desired formatting of a natural language understanding (NLU) dataset.

The present disclosure provides a second example method based on the above-discussed first example method, in which second example method the mapping of the ASR output utilizes deep neural network (DNN).

The present disclosure provides a third example method based on the above-discussed second example method, in which third example method the at least one of pre-training and training includes providing matching pairs of the ASR output and corresponding desired NLU input for selected training samples.

The present disclosure provides a fourth example method based on the above-discussed second example method, in which fourth example method, for the pre-training of the corrector model, data simulating the ASR output is utilized as the ASR output.

The present disclosure provides a fifth example method based on the above-discussed fourth example method, in which fifth example method out-of-domain data simulating the ASR output is utilized as the ASR output for the pre-training of the corrector model.

The present disclosure provides a sixth example method based on the above-discussed fifth example method, in which sixth example method in-domain data is utilized for the training of the corrector model.

The present disclosure provides a seventh example method based on the above-discussed second example method, which seventh example method further includes: fine-tuning the corrector model with project-specific data.

The present disclosure provides an eighth example method based on the above-discussed fourth example method, which eighth example method further includes: artificially generating the data simulating the ASR output without audio data by a simulated ASR runtime process including: i) feeding raw text into a tokenizer to generate spelled-out text; and ii) feeding the spelled-out text into a formatter to generate formatted text as the data simulating the ASR output.

The present disclosure provides a ninth example method based on the above-discussed eighth example method, which ninth example method further includes: fine-tuning the corrector model with project-specific data.

The present disclosure provides a tenth example method based on the above-discussed ninth example method, in which tenth example method, for the fine-tuning of the corrector model, the following are performed: i) project-specific sentences are fed into a simulated ASR runtime process using raw text to generate the ASR output; and ii) the ASR output from the simulated ASR runtime process is used as processed annotated sentences in the fine-tuning, and NLU-expected input for the project-specific sentences is used as annotated sentences in the fine-tuning.

The present disclosure provides an eleventh example method based on the above-discussed first example method, in which eleventh example method, for the pre-training of the corrector model, out-of-domain data simulating the ASR output is utilized as the ASR output.

The present disclosure provides a twelfth example method based on the above-discussed eleventh example method, in which twelfth example method in-domain data is utilized for the training of the corrector model.

The present disclosure provides a thirteenth example method based on the above-discussed twelfth example method, which thirteenth example method further comprises: fine-tuning the corrector model with project-specific data.

The present disclosure provides a fourteenth example method based on the above-discussed thirteenth example method, in which fourteenth example method, for the fine-tuning of the corrector model, the following are performed: i) project-specific sentences are fed into a simulated ASR runtime process using raw text to generate the ASR output; and ii) the ASR output from the simulated ASR runtime process is used as processed annotated sentences in the fine-tuning, and NLU-expected input for the project-specific sentences is used as annotated sentences in the fine-tuning.

The present disclosure provides a fifteenth example method based on the above-discussed eleventh example method, which fifteenth example method further comprises: artificially generating the data simulating the ASR output without audio data by a simulated ASR runtime process including: i) feeding raw text into a tokenizer to generate spelled-out text; and ii) feeding the spelled-out text into a formatter to generate formatted text as the data simulating the ASR output.

### Glossary

ASR: Automatic Speech Recognition
ASRaaS: ASR as a Service .
developer: software programmer creating a VA
DNN: Deep Neural Network
LM: Language Model
NLU: Natural Language Understanding
NLUaaS: NLU as a Service
VA: Virtual Assistant

## Claims

1. A method of correcting an automatic speech recognition (ASR) output of an ASR module, comprising:
providing a corrector model configured to receive the ASR output; and
at least one of pre-training and training the corrector model to map the ASR output to desired formatting of a natural language understanding (NLU) dataset.

2. The method according to claim 1, wherein the mapping of the ASR output utilizes deep neural network (DNN).

3. The method according to claim 2, wherein the at least one of pre-training and training includes providing matching pairs of the ASR output and corresponding desired NLU input for selected training samples.

4. The method according to claim 2, wherein for the pre-training of the corrector model, data simulating the ASR output is utilized as the ASR output.

5. The method according to claim 4, wherein out-of-domain data simulating the ASR output is utilized as the ASR output for the pre-training of the corrector model.

6. The method according to claim 5, wherein in-domain data is utilized for the training of the corrector model.

7. The method according to claim 2, further comprising:
fine-tuning the corrector model with project-specific data.

8. The method according to claim 4, further comprising:
artificially generating the data simulating the ASR output without audio data by a simulated ASR runtime process including: i) feeding raw text into a tokenizer to generate spelled-out text; and ii) feeding the spelled-out text into a formatter to generate formatted text as the data simulating the ASR output.

9. The method according to claim 8, further comprising:
fine-tuning the corrector model with project-specific data.

10. The method according to claim 9, wherein for the fine-tuning of the corrector model, the following are performed:
i) project-specific sentences are fed into a simulated ASR runtime process using raw text to generate the ASR output; and
ii) the ASR output from the simulated ASR runtime process is used as processed annotated sentences in the fine-tuning, and NLU-expected input for the project-specific sentences is used as annotated sentences in the fine-tuning.

11. The method according to claim 1, wherein for the pre-training of the corrector model, out-of-domain data simulating the ASR output is utilized as the ASR output.

12. The method according to claim 11, wherein in-domain data is utilized for the training of the corrector model.

13. The method according to claim 12, further comprising:
fine-tuning the corrector model with project-specific data.

14. The method according to claim 13, wherein for the fine-tuning of the corrector model, the following are performed:
i) project-specific sentences are fed into a simulated ASR runtime process using raw text to generate the ASR output; and
ii) the ASR output from the simulated ASR runtime process is used as processed annotated sentences in the fine-tuning, and NLU-expected input for the project-specific sentences is used as annotated sentences in the fine-tuning.

15. The method according to claim 11, further comprising:
artificially generating the data simulating the ASR output without audio data by a simulated ASR runtime process including: i) feeding raw text into a tokenizer to generate spelled-out text; and ii) feeding the spelled-out text into a formatter to generate formatted text as the data simulating the ASR output.
